# EUROPEAN PATENT APPLICATION

(11) **EP 3 689 753 A1**
(43) Date of publication of application: **05.08.2020**
(21) Application number: 17927119.2
(22) Date of filing: 29.09.2017
(51) Int. Cl.: B64D 47/08, G03B 17/56

(54) **PROTECTIVE COVER AND UNMANNED AERIAL VEHICLE**

(71) Applicant: SZ DJI Technology Co., Ltd., Shenzhen, Guangdong 518057 (CN)
(72) Inventor: HUANG, Tongyao, Shenzhen Guangdong 518057 (CN); FENG, Jiangang, Shenzhen Guangdong 518057 (CN); LIAO, Ran, Shenzhen Guangdong 518057 (CN); XU, Hui, Shenzhen Guangdong 518057 (CN)
(74) Representative: Appelt, Christian W.
(86) International application number: PCT/CN2017/104575
(87) International publication number: WO 2019/061349

(57) **Abstract**

Protective cover and unmanned aerial vehicle (UAV) are provide. The protective cover is configured to fix a gimbal camera of the UAV. The protective cover includes a stopper slidingly connected to the UAV and a locking member rotatably connected to the stopper. The locking member is configured to be locked to the UAV such that the stopper and the locking member are fixed to the UAV. The locking member is closed with the stopper to at least partially cover the gimbal camera. degrees of freedom of the gimbal camera. The protective cover is an integrated structure. The stopper and the locking member define degrees of freedom of the gimbal camera. The protective cover requires fewer accessories and is easy to carry and save. The stopper slides along the UAV, and the locking member rotates around the stopper and is configured to be locked to the UAV, which is easy to be locked and disassembled.

## Description

### FIELD OF THE INVENTION

The present invention generally relates to the field of electronic equipment technology and, more particularly, relates to a protective cover and an unmanned aerial vehicle.

### BACKGROUND

An unmanned aerial vehicle (UAV) is equipped with a gimbal camera, which protrudes from a fuselage surface of the UAV and has a plurality of degrees of freedom adapt to adjust shooting angle thereof. The gimbal camera includes a yaw axis, a pitch axis and a roll axis. By controlling rotational and translational movements of the yaw axis, the pitch axis, and the roll axis, the gimbal camera can make stable shootings during a UAV flight and shooting angles are wide.

The gimbal camera and the UAV are in a cantilever beam structure. In a process of transporting and carrying the UAV, there are inevitable vibration and shock. If the gimbal camera is not supported and protected, the gimbal camera is vulnerable to bumps, which may result in poor operations and even damages.

In related technologies, the gimbal camera applies an additional protection mechanism to protect a safety of the gimbal camera during transportation. For example, a gimbal lock is applied to lock the gimbal camera to define degrees of freedom of the gimbal camera, and a gimbal protective cover is disposed on the gimbal camera jacket to protect the gimbal camera from impact damages during transportation. However, components of the protection mechanism are scattered and easily lost after repeated uses. Moreover, the UAV needs to be used frequently. During a disassembly and assembly of the gimbal camera, the multi-component protection mechanism is cumbersome to use, and a user experience is poor.

### BRIEF SUMMARY OF THE INVENTION

In view of the above description, one object of the present invention is to provide a protective cover and a UAV.

A first aspect of the present invention provides a protective cover for a gimbal camera of a UAV. The protective cover includes a stopper slidingly connected to the UAV and a locking member rotatably connected to the stopper. The locking member is configured to be locked to the UAV such that the stopper and the locking member are fixed to the UAV. The locking member is closed with the stopper to at least partially cover the gimbal camera.

A second aspect of the present invention provides a UAV. The UAV includes a fuselage, a gimbal camera mounted on the fuselage, and a protective cover for fixing the gimbal camera of the UAV. The protective cover covers the gimbal camera and is connected to the fuselage. The protective cover includes a stopper slidingly connected to the fuselage and a locking member rotatably connected to the stopper. The locking member is configured to be locked to the fuselage such that the stopper and the locking member are fixed to the fuselage. The locking member is closed with the stopper to at least partially cover the gimbal camera.

The technical solutions provided by embodiments of the present invention may include the following beneficial effects.

The protective cover is an integrated structure. During an assembly of the protective cover to the fuselage of the UAV, the stopper and the locking member are configured to restrict degrees of freedom of the gimbal camera. The protective cover requires fewer accessories and is easy to carry and save. The stopper slides along the UAV, and the locking member rotates around the stopper and is configured to be locked to the UAV, which is easy to be locked and disassembled. The structure of the protective cover matches the fuselage of the UAV. An overall appearance is beautiful, and a protection of the gimbal camera is desired.

### BRIEF DESCRIPTION OF THE DRAWINGS

In order to more clearly explain embodiments of the present invention, drawings used in a description of the embodiments or the prior art will be briefly introduced below. Obviously, the drawings in the following description are some embodiments of the present invention. For those skilled in the art, other drawings can be acquired based on these drawings without creative efforts.
FIG. 1 illustrates a three-dimensional schematic diagram of an exemplary UAV consistent with various disclosed embodiments of the present invention;
FIG. 2 illustrates a schematic diagram of an exemplary UAV consistent with various disclosed embodiments of the present invention;
FIG. 3 illustrates a mounting schematic diagram of an exemplary protective cover assembled to a fuselage consistent with various disclosed embodiments of the present invention;
FIG. 4 illustrates a schematic diagram of an exemplary protective cover consistent with various disclosed embodiments of the present invention;
FIG. 5 illustrates an exploded schematic diagram of an exemplary protective cover consistent with various disclosed embodiments of the present invention;
FIG. 6 illustrates a schematic diagram of an exemplary stopper consistent with various disclosed embodiments of the present invention;
FIG. 7 illustrates a schematic diagram of an exemplary locking member consistent with various disclosed embodiments of the present invention;
FIG. 8 illustrates a schematic diagram of the locking member shown in FIG. 7 at another angle consistent with various disclosed embodiments of the present invention;
FIG. 9 illustrates a schematic and cross-sectional diagram of an exemplary locking portion of a locking part and a latching part consistent with various disclosed embodiments of the present invention;

Reference Numeral List: Protective Cover 10; Locking Member 11; Main Body 111; Deformation Groove 1111; Limiting Boss 1112; Locking Part 112; Lock Hook 1121; Free End 1122; Fixed End 1123; Snap Boss 113; Abutment 114; Front Bezel 1141; Back Bezel 1142; Stopper 12; Body Part 121; Rib Part 1211; Side Wall Part 122; Limiting Part 1221; Curve Part 1222; Guide Part 1223; Lead Part 123; Circular Arc Part 1231; Slope Part 1232; Guide Groove Part 1233; Flat Part 1234; Hinge Part 124; Accommodating Groove 125; Enclosed Space 13; Fuselage 20; Recessed Part 21; Latching Part 22; Bayonet 23; Guide Rail Part 24; Gimbal Camera 30; Roll Axis 31; Pitch Axis 32; Imaging Device 33; Driving Device 34; End Face 341; Gimbal Frame 35; Outer Peripheral Surface 351; Positioning Surface 352.

### DETAILED DESCRIPTION

The technical solutions in the embodiments of the present invention will be clearly and completely described below with reference to the accompanying drawings. Obviously, the described embodiments are part of the embodiments of the present invention, but not all the embodiments. Based on the described embodiments of the present invention, other embodiments acquired by those skilled in the art without creative efforts shall fall within the protection scope of the present invention.

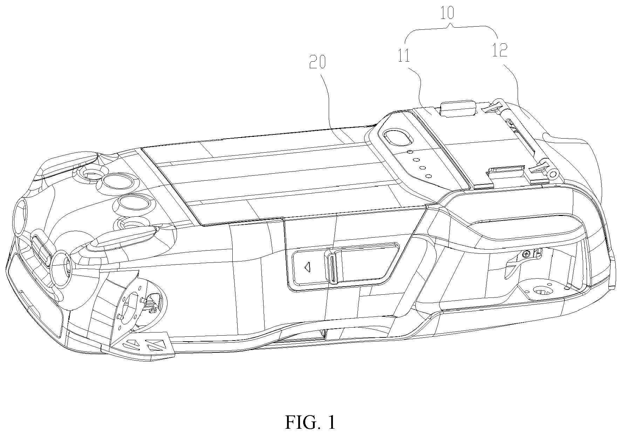

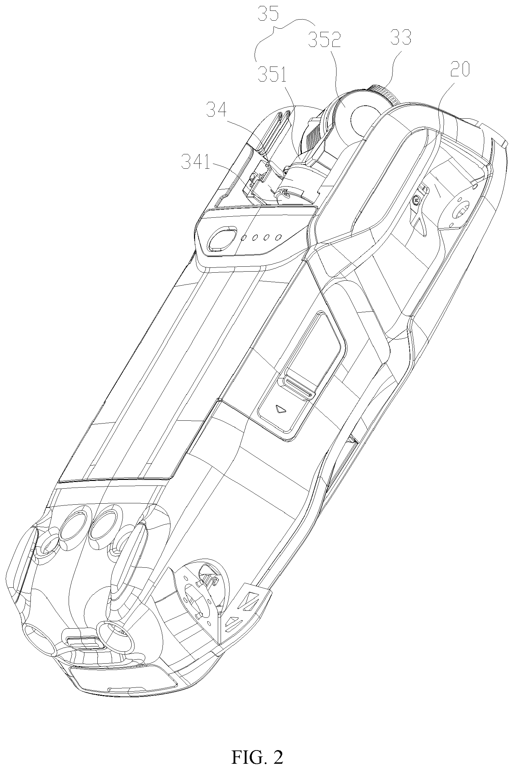

As shown in FIGS. 1, 2 and 3, a UAV includes a fuselage 20, a gimbal camera 30, and a protective cover 10 assembled on the fuselage 20. The gimbal camera includes a driving device 34, an imaging device 33, and a gimbal frame 35 connecting the driving device 34 and the imaging device 33. The gimbal camera includes a gimbal with a one-axis, two-axis, or three-axis gimbal. The fuselage 20 includes a recessed part 21 in which a storage space is formed. The storage space is similar to a trapezoidal space, which is surrounded by three side walls and a top surface, and forms openings at bottom surfaces and inclined surfaces. The gimbal camera 30 extends from the fuselage 20 to the storage space.

The protective cover 10 is assembled to the fuselage 20 and matches the recessed part 21. At least part of the protective cover 10 is embedded in the recessed part 21 so that a closed space is formed at the recessed part 21. The protective cover 10 stores the gimbal camera 30 in the enclosed space. An inner surface of the protective cover 10 is configured to restrict at least one degree of freedom of the gimbal camera 30. In order to facilitate the understanding of degrees of freedom of the gimbal camera 10 by the protective cover 10, upward-downward, forward-backward directions are defined: a side where the gimbal camera 30 is assembled with the fuselage 20 is defined as a downward direction, and an end where the gimbal camera 30 is assembled with the fuselage 20 is defined as a forward direction. Taking a three-axis gimbal as an example, the gimbal includes a pitch axis 32, a roll axis 31 and a yaw axis (not shown). The roll axis 31 is in the front-rear direction. The pitch axis 32 is assembled to the roll axis 31. The yaw axis is perpendicular to a bottom surface of the recessed part 21.

The protective cover 10 includes a stopper 12 slidably connected to the fuselage 20 and a locking member 11 rotatably connected to the stopper 12. The locking member 11 rotates around the stopper 12 so that the protective cover 10 can be in an expanded state or a closed state. Fixing methods of the stopper 12 and the locking member 11 may include, but are not limited to, the following two methods.
Method 1: the stopper 12 and the locking member 11 are closed and connected to form a whole. The locking member 11 or the stopper 12 is connected to the fuselage 20 to fix the protective cover 10 on the fuselage 20. In the fixing method, the stopper 12 and the locking member 11 of the protective cover 10 are configured to independently restrict degrees of freedom of the gimbal camera 30 through their own structures, and transmit impact forces received by the protective cover 10 to the fuselage 20 through a connection portion. The fixing method improves an impact resistance of the gimbal and has a desired buffer effect and an easy disassembly.
Method 2: the stopper 12 is configured to slide along the fuselage 20 and is restricted to a preset position of the fuselage 20, and the locking member 11 is snap-connected to the fuselage 20 or connected by a fastener. In the fixing method, the stopper 12 and the locking member 11 are combined with the fuselage 20 to achieve restrictions of degrees of freedom of the gimbal camera 30. The stopper 12 and the locking member 11 respectively transmit impact forces received by the protective cover 10 to the fuselage 20, so as to avoid transmitting vibration to the gimbal camera 30, resulting a desired protection performance of the gimbal camera 30.

The process of assembling the protective cover 10 to the fuselage 20 is as follows: The stopper 12 is configured to slide from a free end of the gimbal camera 30 to a fixed end of the gimbal camera 30 along the recessed part 21 of the fuselage 20, and cover at least part of the gimbal camera 30. The stopper 12 slides to the preset position of the fuselage 20 so that the gimbal camera 30 is at least partially accommodated in the stopper 12. During a sliding of the stopper 12 and after the stopper 12 slides to the preset position of the fuselage 20, the stopper 12 is at least partially abutted against the gimbal camera 30 to restrict at least one degree of freedom of the gimbal camera 30. The locking member 11 is pivotally connected to the stopper 12, and the locking member 11 rotates to lock the locking member 11 to the fuselage 20. In a state where the locking member 11 rotates around the stopper 12 and is snap-connected to the fuselage 20, the locking member 11 is at least partially abutted against the gimbal camera 30 to restrict at least one degree of freedom of the gimbal camera 30. Optionally, an enclosed space 13 is formed among the locking member 11, the stopper 12 and the fuselage 20. The stopper 12 and/or the locking member 11 are configured to restrict at least one degree of freedom of the gimbal camera 30, so that the gimbal camera 30 is restricted in the enclosed space 13.

In a disassembly process of the protective cover, a lock relationship is first unlocked between the lock member 11 and the fuselage 20, such as removing fasteners and compressing the locking member 11 to release the locking relationship between the locking member 11 and fuselage 20. Then the locking member 11 is rotated to disengage the fuselage 20 and slide the stopper 12 in a direction away from the fuselage 20, so that the stopper 12 slides along the fuselage 20 and is pulled out, and a restriction on the gimbal camera 30 is released. The protective cover 10 is easily disassembled.

The stopper 12 and the locking member 11 can be detachably assembled to the fuselage 20 of the UAV, which is convenient for the protection cover 10 to protect and support the gimbal camera 30, so that the gimbal camera 30 has a desired anti-vibration performance during transportation and carrying. The gimbal camera 30 is disposed in the storage space of the recessed part 21. The stopper 12 slides along the fuselage 20 and closes one side openings of the recessed part 21. The locking member 11 is rotatably connected and configured to be locked to the fuselage 20 to close openings on the other side of the recessed part 21 to form the enclosed space 13 so that the gimbal camera 30 is in a closed environment with high security. An edge of the protective cover 10 is flush with an edge of the recessed part 21, so that the structure is beautiful.

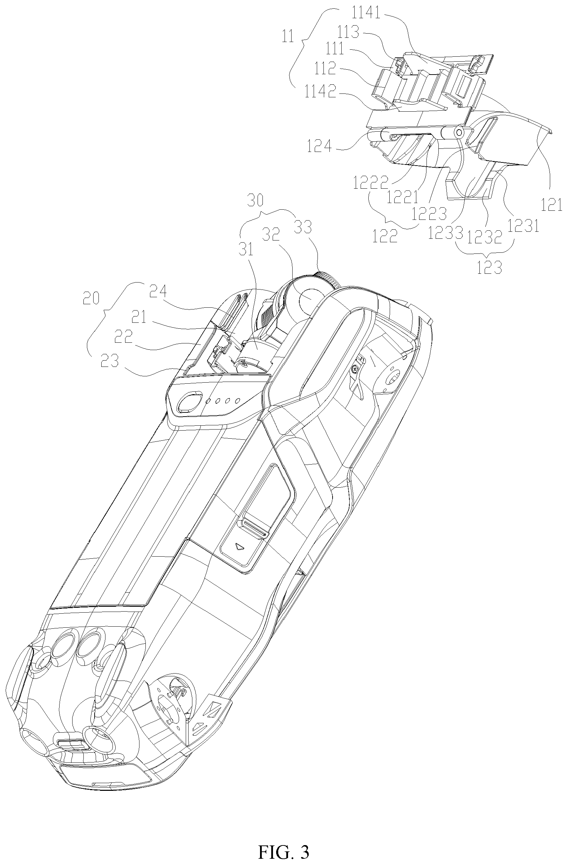

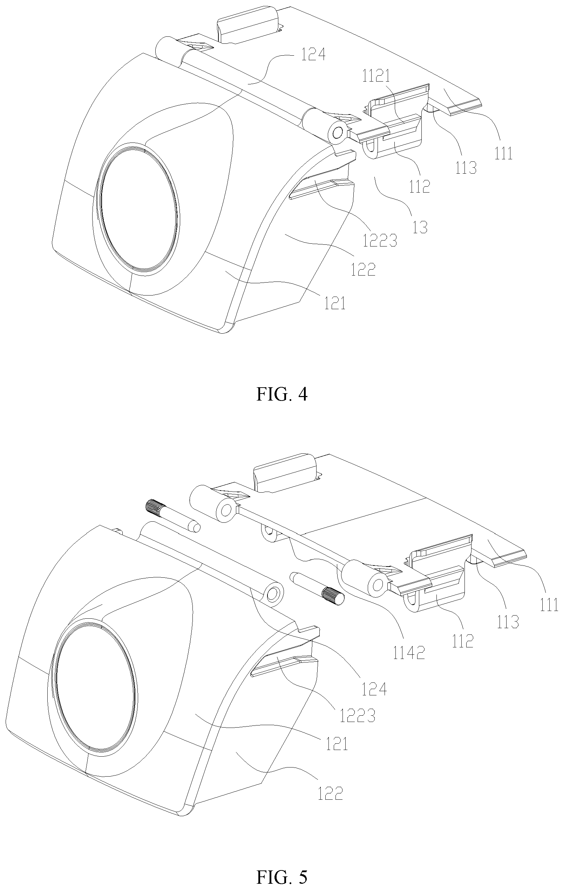

As shown in FIG. 3 and FIG. 4, the stopper 12 is configured for being slidingly assembled to the fuselage 20. The stopper 12 includes a body part 121 and side wall parts 122 disposed on opposite sides of the body part 121. Cross sections of the side wall part 122 and the body part 121 present a U-shaped structure. Both side wall parts 122 slide along the fuselage 20 so that the body part 121 closes an end of the recessed part 21. The side wall part 122 includes a protruding limiting part 1221. The limiting part 1221 projects toward the enclosed space 13 to snap the gimbal camera 30 between the two side wall parts 122. When the stopper 12 slides along the fuselage 20, at least one axis of the gimbal camera 30 is restricted by the limiting part 1221, so that rotational degrees of freedom of the roll axis 31 and the yaw axis, and translational degrees of freedom of the pitch axis 32 are restricted. For example, positioning surfaces 352 are disposed on both sides of the gimbal. The positioning surfaces 352 can be located on both sides of the gimbal frame 35. When the stopper 12 slides along the body 20, the limiting part 1221 is clamped to the two positioning surfaces 352 of the gimbal camera 30, thereby restricting part of translational degrees of freedom and rotational degrees of freedom of the gimbal, etc.

The limiting part 1221 protrudes from an inner surface of the side wall part 122. A shape of the inner surface of the side wall part 122 can be adapted according to the positioning surface 352 of the restricted gimbal frame 35. For example, the limiting part 1221 includes a plurality of spaced-apart ribs. Surfaces of the ribs facing the enclosed space 13 are flushed to form limit surfaces. Or, projections are formed on the side wall part 122. Surfaces of the projections facing the enclosed space 13 form limit surfaces. During a sliding of the stopper 12, degrees of freedom of the gimbal camera 30 are partially restricted by two limit surfaces. For example, rotational degrees of freedom of the roll axis 31 and the yaw axis of this gimbal, and translational degrees of freedom along the pitch axis 32 are restricted by limit surfaces.

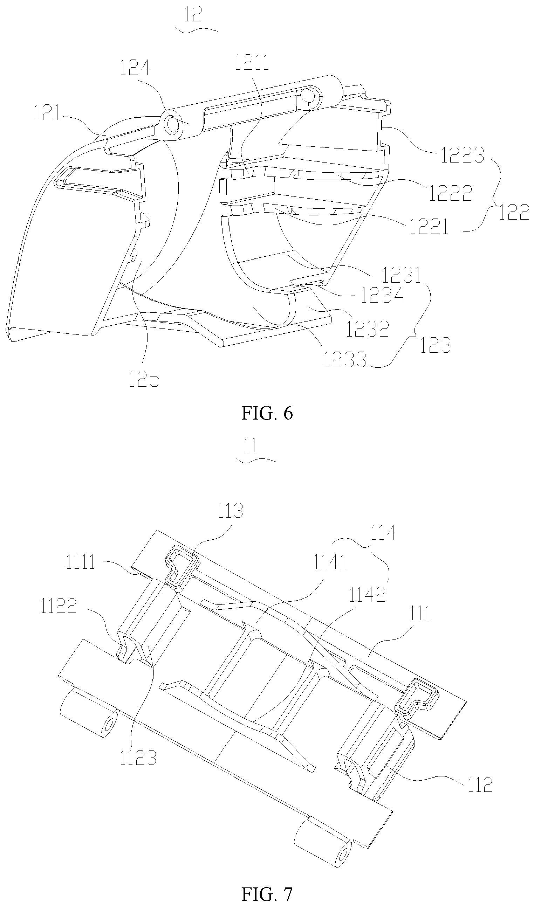

As shown in FIG. 6, in order for the gimbal camera 30 to be accurately restricted by the limiting part 1221, the side wall part 122 further includes a curve part 1222 that intersects the limiting part 1221. The curve part 1222 forms guide surfaces that are smoothly connected to the limit surfaces. The gimbal camera 30 slides along the guide surfaces to the limit surfaces. The curve part 1222 is disposed at an end of the side wall part 122. A horn-shaped structure is formed on the curve parts 1222 opposite to the two side wall parts 122 and guides the gimbal camera 30 to slide to the limiting part 1221, so that the gimbal camera 30 is restricted by the limiting part 1221, and a guiding effect and a repeatability are desired.

The main body 121 is also configured to restrict forward translation freedoms of the roll axis 31 of the gimbal camera 30. The forward translation freedoms can be restricted by matching the main body 121 itself with the gimbal camera, or by protruding structures or rib structures protruding from the main body 121. For example, the body part 121 includes rib parts 1211 protruding from inner surfaces of the body part 121 in a direction away from the body part 121. The gimbal camera 30 abuts against the rib part 1211 to restrict translational degrees of freedom and rotational degrees of freedom of the roll axis 31 in the forward direction. A disposition of the rib part 1211 may reduce a contact surface between the body part 121 and the gimbal camera, reduce an effective area of the protective cover 10 transmitted to the gimbal camera 30, improve buffer effects, and stabilize a position of the gimbal camera 30. Optionally, the rib part 1211 intersects the limiting part 1221, and are on the same plane. The whole structure is simple and convenient to process.

The curve part 1222 is configured to guide the gimbal camera 30 from both sides. In order to improve an efficiency and an accuracy of restriction of the gimbal camera 30 by the stopper 12, during a movement of the stopper 12, the stopper 12 can also be guided from a bottom or top of the gimbal camera 30 to slide along the gimbal camera 30, so that the gimbal camera 30 is restricted by the stopper 12.

In one embodiment, the stopper 12 includes a lead part 123 protruding from a side of the body part 121. The lead part 123 extends to both sides and intersects the side wall parts 122. The gimbal camera 30 slides along the lead part 123 and is restricted by the limiting part 1221. During a movement of the stopper 12 along the fuselage 20, the lead part 123 is in an accommodation space and moves along a top surface of the recessed part 21 to support a side of the gimbal camera 30 facing the top surface of the por 21.

The lead part 123 includes a circular arc part 1231 that matches a shape of the gimbal camera 30, and a slope part 1232 that is inclined to intersect the circular arc part 1231. The body part 121 has a curved shape. The circular arc part 1231 intersects the body part 121 so that the body part 121 and the lead part 123 make a circular arc transition, which makes a structure beautiful. The slope part 1232 is inclined toward the recessed part 21, so that the gimbal camera 30 moves smoothly to the circular arc part 1231. The lead part 123 is configured to restrict translational degrees of freedom of the gimbal camera 30 along the upward direction of the yaw axis, and rotational degrees of freedom of the pitch axis 32. Or, the slope part 1232 and the circular arc part 1231 are connected by a flat part 1234. The flat part 1234 is configured to restrict translational degrees of freedom of the yaw axis in the upward direction and rotational degrees of freedom of the pitch axis 32 of the gimbal camera 30.

An end of the gimbal camera 30 is disposed with a protruding part, such as a lens, etc. Correspondingly, the lead part 123 includes a guide groove part 1233 recessed from a surface of the lead part 123. The guide groove part 1233 extends toward the body part 121. The body part 121 is recessed to form an accommodating groove 125. The accommodating groove 125 is in the extending direction of the recessed part 21 and is configured to accommodate a protruding structure of the gimbal camera 30. During a movement of the gimbal along the lead part 123, the protruding structure of the gimbal camera 30 moves along the guide groove part 1233 and is stored in the accommodating groove 125, so that the gimbal camera 30 is restricted to the circular arc part 1231, and a restriction effect is desired.

As shown in FIG. 5 and FIG. 7, in order to restrict rotational degrees of freedom of the roll axis 31 and translational degrees of freedom of the roll axis 31 and the yaw axis, the locking member 11 is fastened to the fuselage 20 and abuts against the gimbal camera 30 to restrict degrees of freedom thereof. The locking member 11 includes a main body 111 and an abutment 114 protruding from the main body 111. The abutment 114 is configured to abut against the gimbal camera 30 to restrict rotational degrees of freedom of the roll axis 31 and translational degrees of freedom of the roll axis 31 and the yaw axis of the gimbal camera 30.

When the stopper 12 is assembled to the preset position of the fuselage 20, the locking member 11 is rotated and connected to the fuselage 20. The abutment 114 includes a front bezel 1141 protruding from the body part 121 and having a flat plate shape. When the locking member 11 is locked to the fuselage 20, the front bezel 1141 abuts against an end surface 341 of the gimbal camera 30. The end surface 341 is a side surface of the driving device 34 and is opposite to the body part 121. The front bezel 1141 is configured to restrict translational degrees of freedom of the roll axis 31 of the gimbal camera 30.

In one embodiment, the abutment 114 includes a back bezel 1142 disposed at a distance from the front bezel 1141 on the main body 111. The back bezel 1142 is configured to abut against an outer peripheral surface 351 of the gimbal frame 35. The back bezel 1142 includes a concave curved surface matching the outer peripheral surface 351 of the gimbal frame 35. The back bezel 1142 abuts against the outer peripheral surface 351, which may restrict translational degrees of freedom of the gimbal camera 30 along the downward direction of the yaw axis and assist in restricting rotational degrees of freedom of the gimbal camera 30 around the roll axis 31.

Degrees of freedom of the gimbal camera 30 are fully restricted by combining the stopper 12 and the locking member 11. When the stopper 12 and the lock 11 are assembled again after disassembly, degrees of freedom of the gimbal camera 30 may be accurately restricted, and a repeatability is ensured. Through a sliding limitation of the stopper 12 and a rotation lock of the locking member 11, degrees of freedom of the gimbal camera 30 are fully restricted. The gimbal camera 30 is easy to operate.

As shown in FIG. 3 and FIG. 4, the stopper 12 slides along the fuselage 20 of the UAV and may include following forms: a simple guide structure, such as a side surface of the stopper 12 for surface sliding along a surface of the recessed part 21 of UAV, etc.; or a guide and support structure, such as a guide groove or a guide post on the stopper 12. Correspondingly, a guide post or a guide groove is disposed on the fuselage 20 so that the stopper 12 and the fuselage 20 slide with each other.

In one embodiment, the side wall part 122 further includes at least one guide part 1223. The guide parts 1223 respectively disposed on two opposite side wall parts 122 are parallel to each other. The guide parts 1223 are configured to guide the stopper 12 to slide along the UAV. Correspondingly, the fuselage 20 includes at least two guide rail parts 24. The stopper 12 of the protective cover 10 slides along the guide rail parts 24. The guide part 1223 matches the guide rail part 24. For example, the guild part 1223 is a guide groove-like structure that the side wall part 122 is recessed to form. The guide rail part 24 projects outward to form a rib-like structure. The guide part 1223 slides along the guide rail part 24, and vice versa. By providing matching guide parts 1223 and guide rail parts 24 to guide a sliding of the stopper 12 on the fuselage 20, the moving direction is stable. Preset matching positions of the stopper 12 and the fuselage 20 are repeatable. The restricted position of the gimbal camera 30 is stable. The guide part 1223 slides along the guide rail part 24. The stopper 12 only has a translational degree of freedom of sliding along the guide rail part 24, with a combination of a locking connection between the locking member 11 and the fuselage 20, the protective cover is fixed to the fuselage 20. Such installation is relatively easy.

The locking member 11 is hingedly assembled to the stopper 12. Accordingly, the stopper 12 includes a hinge part 124 protruding toward the body part 121. The hinge part 124 extends to both sides and intersects the side wall parts 122. The main body 111 of the locking member 11 is hingedly connected to the hinge part 124 of the stopper 12. The locking member 11 and the limiting member 12 are fixedly connected for easy carrying and storage.

As shown in FIGS. 3, 7 and 8, in order to reduce the fixing accessories between the protective cover 10 and the fuselage 20, the protective cover 10 and the fuselage 20 of the UAV are connected by a snap. The locking member 11 further includes a locking part 112 protruding from the main body 111. The locking part 112 is configured to buckle the locking member 11 to the UAV. Correspondingly, the fuselage 20 includes a latching part 22 protruding toward the storage space. The locking member 11 of the protective cover 10 is snap-connected to the latching part 22.

The locking part 112 is disposed on the main body 111 and is configured to elastically deform after receiving an external force, and to reset after the external force disappears. In one embodiment, the locking part 112 has a U-shaped structure, one side of which is fixed to the main body 111 as a fixed end 1123, and the other side of which is a free end 1122. There is a deformation space between the fixed end 1123 and the free end 1122. A lock hook 1121 is disposed at the free end 1122. Correspondingly, a deformation groove 1111 is disposed in the main body 111 of the locking member 11. The free end 1122 in the deformation groove 1111 performs an elastic process of compression deformation or expansion reset. In order to improve a practical life of the locking part 112 and control deformation thereof, the locking member 11 further includes at least one limiting boss 1112, which is in the deformation groove 1111 and extends toward the free end 1122.

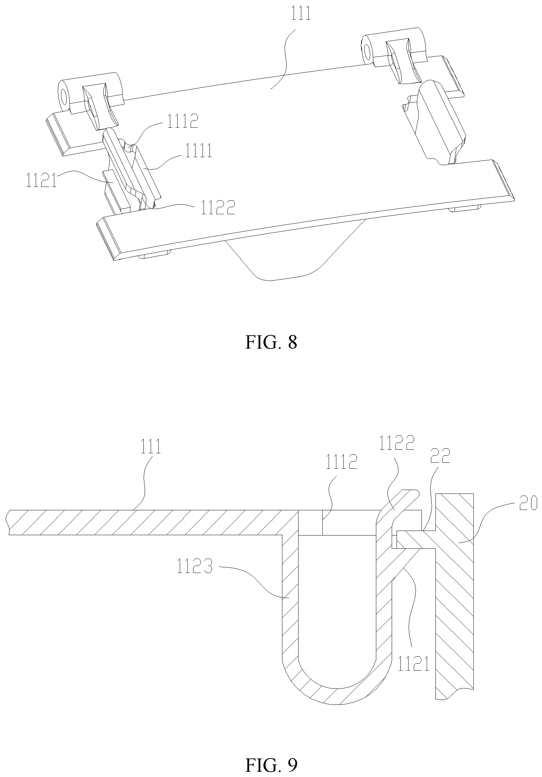

As shown in FIG. 9, when the locking member 11 rotates and abuts against the fuselage 20 of the UAV, the free end 1122 of the locking part 112 is pressed to an edge of the latching part 22 and elastically deforms so that the locking part 112 enters the recessed part 21 and the lock hook 1121 is engaged with the latching part 22. After the lock hook 1121 passes through the latching part 22, the locking part 112 is elastically reset so that the lock hook 1121 is configured to reversely buckle the latching part 22, and the locking member 11 is snap-connected to the fuselage 20. When the gimbal camera 30 needs to be used, pressing the locking part 112 to make the lock hook 1121 to unlock the latching part 22. The protective cover 10 can be easily removed from the fuselage 20. The protective cover 10 has an integrated structure and is detachably connected with a desired user experience. The limiting boss 1112 is disposed to limit an elastic deformation of the locking part 112 to prevent the locking part 112 from being damaged due to excessive pressing of the locking part 112. Accordingly, the locking part 112 has a long service life and a desired stability.

The locking member 11 is snap-connected to the fuselage 20, which restricts a sliding freedom of the lock hook 1121 in a locking direction, and the locking member 11 can be moved in a direction that is not locked by the lock hook 1121. The locking member 11 includes a snap boss 113 protruding from the main body 111. Correspondingly, the fuselage 20 further includes a bayonet 23 that matches the snap boss 113 of the locking member 11. The locking member 11 is rotated to the fuselage 20 so that the snap boss 113 and the bayonet 23 are plugged and connected.

The locking member 11 is plugged and connected to the bayonet 23 through the snap boss 113, so that the locking member 11 can only move in the plugging direction of the locking member 11 and the bayonet 12. With a combination of a snap connection of the locking part 112, the locking member 11 can be stably connected to the fuselage 20. The installation position is stable, and the lock is secure.

Methods and devices provided by embodiments of the present invention have been described in detail above. Specific examples are applied to explain principles and implementation modes of the present invention. The description of the above embodiments is only used to help understand methods and core ideas of the present invention. For those skilled in the art, according to the ideas of the present invention, there may be changes in specific implementations and scopes of application. In the case of no conflict, the embodiments described above and features in the embodiments can be combined with each other. Thus, the content of this specification should not be construed as a limitation on the present invention.

## Claims

1. A protective cover for a gimbal camera of an unmanned aerial vehicle (UAV), comprising:
a stopper slidingly connected to the UAV; and
a locking member rotatably connected to the stopper, the locking member being configured to be locked to the UAV, such that the stopper and the locking member are fixed to the UAV,
wherein the locking member is closed with the stopper to at least partially cover the gimbal camera.

2. The protective cover according to claim 1, wherein the stopper is configured to slide from a free end of the gimbal camera toward a fixed end of the gimbal camera and cover at least part of the gimbal camera.

3. The protective cover according to claim 1, wherein the stopper is at least partially abutted with the gimbal camera to restrict at least one degree of freedom of the gimbal camera.

4. The protective cover according to claim 3, wherein the stopper includes a body part and side wall parts opposite to each other disposed on two sides of the body part, and each side wall part includes a protruding limiting part configured to buckle the gimbal camera between two side wall parts.

5. The protective cover according to claim 4, wherein each side wall part further includes a curve part intersecting the limiting part, the limiting part includes limit surfaces configured to restrict degrees of freedom of the gimbal camera, the curve part includes guide surfaces that are connected to the limit surfaces, and the gimbal camera slides along the guide surfaces to the limit surfaces.

6. The protective cover according to claim 4, wherein each side wall part further includes at least one guide part, the guide parts respectively disposed on two opposite side wall parts are parallel to each other, and the guide parts are configured to guide the stopper to slide along the UAV.

7. The protective cover according to claim 4, wherein the stopper includes a lead part protruding from a side of the body part, the lead part extends to both sides and intersects the side wall parts, and the gimbal camera slides along the lead part and is restricted by the limiting part.

8. The protective cover according to claim 7, wherein the lead part includes a circular arc part matching the gimbal camera, and a slope part inclinedly intersects the circular arc part, and the circular arc part intersects the body part.

9. The protective cover according to claim 7, wherein the lead part includes a guide groove part recessed from a surface of the lead part, and the guide groove part extends toward the body part.

10. The protective cover according to claim 4, wherein the stopper includes a hinge part protruding toward the body part, and the hinge part extends to both sides and intersect the side wall parts and is hingedly connected to the lock member.

11. The protective cover according to claim 1, wherein the locking member is pivotally connected to the stopper, and the locking member rotates around the stopper and is configured for a snap connection with the UAV.

12. The protective cover according to claim 1, wherein the locking member is at least partially abutted with the gimbal camera to restrict at least one degree of freedom of the gimbal camera.

13. The protective cover according to claim 12, wherein the locking member includes a main body hingedly connected to the stopper, a locking part protruding from the main body, and the locking part is configured to buckle the locking member to the UAV.

14. The protective cover according to claim 13, wherein the locking member includes a snap boss protruding from the main body, and the snap boss is configured for a plug-in connection with the UAV.

15. The protective cover according to claim 13, wherein the locking member includes an abutment protruding from the main body, and the abutment is configured to abut against the gimbal camera.

16. The protective cover according to claim 15, wherein the abutment includes a front bezel for abutting against an end surface of the gimbal camera.

17. The protective cover according to claim 16, wherein the gimbal camera includes a gimbal frame, the abutment includes a back bezel disposed on the main body at a distance from the front bezel, and the back bezel is configured to abut against the gimbal frame.

18. The protective cover according to claim 17, wherein the back bezel includes a concave curved surface matching the gimbal frame.

19. An unmanned aerial vehicle (UAV), comprising:
a fuselage;
a gimbal camera mounted on the fuselage; and
a protective cover fixing the gimbal camera of the UAV, wherein the protective cover covers the gimbal camera and is connected to the fuselage,
wherein the protective cover includes:
a stopper slidingly connected to the fuselage; and
a locking member rotatably connected to the stopper, the locking member being configured to locked to the fuselage, such that the stopper and the locking member are fixed to the fuselage,
wherein the locking member is closed with the stopper to at least partially cover the gimbal camera.

20. The UAV according to claim 19, wherein the stopper is configured to slide from a free end of the gimbal camera toward a fixed end of the gimbal camera, and cover at least part of the gimbal camera, and the stopper is at least partially abutted with the gimbal camera to restrict at least one degree of freedom of the gimbal camera.

21. The UAV according to claim 19, wherein the stopper is at least partially abutted with the gimbal camera to restrict at least one degree of freedom of the gimbal camera.

22. The UAV according to claim 21, wherein the stopper includes a body part and side wall parts opposite to both sides of the body part, and each side wall part includes a protruding limiting part configured to buckle the gimbal camera between two side wall parts.

23. The UAV according to claim 22, wherein each side wall part further includes a curve part intersecting the limiting part, the limiting part includes limit surfaces for defining degrees of freedom of the gimbal camera, the curve part includes guide surfaces that are connected to the limit surfaces, and the gimbal camera slides along the guide surfaces to the limit surfaces.

24. The UAV according to claim 22, wherein each side wall part further includes at least one guide part, the guide parts respectively disposed on two opposite side wall parts are parallel to each other, and the guide parts are configured to guide the stopper to slide along the UAV.

25. The UAV according to claim 22, wherein the stopper includes a lead part protruding from a side of the body part, the lead part extends to both sides and intersects the side wall part, and the gimbal camera slides along the lead part and is defined by the limiting part.

26. The UAV according to claim 25, wherein the lead part includes a circular arc part matching the gimbal camera, and a slope part inclinedly intersects the circular arc part, and the circular arc part intersects the body part.

27. The UAV according to claim 25, wherein the lead part includes a guide groove part recessed from a surface of the lead part, and the guide groove part extends toward the body part.

28. The UAV according to claim 22, wherein the stopper includes a hinge part protruding toward the body part, and the hinge part extends to both sides and intersect the side wall part and is hingedly connected to the lock member.

29. The UAV according to claim 19, wherein the locking member is pivotally connected to the stopper, and the locking member rotates around the stopper and is configured for a snap connection with the UAV.

30. The UAV according to claim 19, wherein the locking member is at least partially abutted with the gimbal camera to restrict at least one degree of freedom of the gimbal camera.

31. The UAV according to claim 30, wherein the locking member includes a main body hingedly connected to the stopper, a locking part protruding from the main body, and the locking part is configured to buckle the locking member to the UAV.

32. The UAV according to claim 31, wherein the locking member includes a snap boss protruding from the main body, and the snap boss is configured for a plug-in connection with the UAV.

33. The UAV according to claim 31, wherein the locking member includes an abutment protruding from the main body, and the abutment is configured to abut against the gimbal camera.

34. The UAV according to claim 33, wherein the abutment includes a front bezel for abutting against an end surface of the gimbal camera.

35. The UAV according to claim 34, wherein the gimbal camera includes a gimbal frame, the abutment includes a back bezel disposed on the main body at a distance from the front bezel, and the back bezel is configured to abut against the gimbal frame.

36. The UAV according to claim 35, wherein the back bezel includes a concave curved surface matching the gimbal frame.

37. The UAV according to claim 19, wherein an enclosed space is formed among the locking member, the stopper and the fuselage, the gimbal camera is in the enclosed space.

38. The UAV according to claim 37, wherein the fuselage includes a recessed part in which a storage space is formed, the gimbal camera extends from the fuselage to the storage space, the protective cover matches the recessed part, and at least part of the protective cover is embedded in the recessed part.

39. The UAV according to claim 38, wherein an edge of the protective cover is flush with an edge of the recessed part.

40. The UAV according to claim 38, wherein the fuselage includes a latching part protruding toward the storage space, the locking member of the protective cover is snap-connected to the latching part.

41. The UAV according to claim 40, wherein the fuselage further includes a bayonet that matches the locking member of the protective cover, the locking member and the bayonet are plugged and connected.

42. The UAV according to claim 19, wherein the fuselage includes at least two guide rail parts, the stopper of the protective cover slides along the guide rail parts.

43. The UAV according to claim 19, wherein the gimbal camera includes a gimbal, and the gimbal includes a one-axis, two-axis, or three-axis gimbal.
